# EUROPEAN PATENT APPLICATION

(11) **EP 4 769 769 A1**
(43) Date of publication of application: **01.07.2026**
(21) Application number: 25208909.9
(22) Date of filing: 15.10.2025
(51) Int. Cl.: H01M 50/383, H01M 50/358

(54) **ENERGY STORAGE SYSTEM INCLUDING GAS DISCHARGING DEVICE**

(30) Priority: 31.12.2024 KR 20240202845
(71) Applicant: SAMSUNG SDI CO., LTD., Yongin-si, Gyeonggi-do 17084 (KR)
(72) Inventor: YUN, Jinbhum, Yongin-si, Gyeonggi-do 17084 (KR)
(74) Representative: Regimbeau

(57) **Abstract**

An energy storage device according to embodiments may include a battery module including battery cells, and a gas discharging device connected to the battery module. The gas discharging device may include a filling portion filled with an extinguishing agent, a void path for moving exhaust gas discharge from the battery module and the extinguishing agent input from the filling portion, a first vent portion disposed between the filling portion and the void path, and a mixing portion connected to the void path, for mixing the exhaust gas and the extinguishing agent input from the void path and discharging mixed gas to an outside.

## Description

### FIELD

The present disclosure relates to an energy storage device including a gas discharging device.

### BACKGROUND

Rechargeable batteries are widely used not only in small devices such as portable electronic devices, but also in medium and large devices such as electric vehicles and energy storage systems (ESS), and their use is rapidly increasing.

The rechargeable batteries may explode due to a rapid increase in internal pressure if a thermal runaway phenomenon occurs, which is a decomposition reaction caused by heat generation due to internal short circuit, overcharge, or over-discharge.

Despite extensive efforts to suppress ignition of rechargeable batteries, the risk of explosion remains high if exhaust gas contains flammable gases and an ignition source exists around the rechargeable battery.

The herein-described information disclosed in the technology behind this disclosure is only intended to improve understanding of the background of the present disclosure, and may therefore include information that does not constitute conventional art.

### SUMMARY

The present disclosure attempts to provide an energy storage device including a gas discharging device for preventing explosion caused by exhaust gas generated during thermal runaway of a battery cell.

According to the invention, there is provided an energy storage device as defined in the claims.

Technical objects of the present disclosure are not limited by the herein-described technical object, and the technical objects that are described will be clearly comprehended by a person of ordinary skill in the art.

Embodiments of the present disclosure provides an energy storage device including: a battery module including battery cells, and a gas discharging device connected to the battery module, wherein the gas discharging device includes a filling portion filled with an extinguishing agent, a void path for moving exhaust gas discharge from the battery module and the extinguishing agent input from the filling portion, a first vent portion disposed between the filling portion and the void path, and a mixing portion connected to the void path, for mixing the exhaust gas and the extinguishing agent input from the void path and discharging mixed gas to an outside.

The void path may include a first connection pipe connected to the battery module, a second connection pipe connected to the first vent portion, and a third connection pipe connected to the mixing portion.

The first connection pipe may face the third connection pipe, and the second connection pipe may be disposed between the first connection pipe and the third connection pipe.

The filling portion may include a tank having an internal space configured to be filled with the extinguishing agent, a protruding portion disposed on a side of the tank, and having a thread formed on an external circumferential surface, and a penetration hole provided to an inside of the protruding portion and penetrating an internal space of the tank.

The mixing portion may include a mixed gas tank including an internal space having a predetermined size, an inlet for inflowing the exhaust gas and the extinguishing agent, and an outlet for discharging mixture of the exhaust gas and the extinguishing agent mixed in the internal space, and a mixing path arranged in the internal space and providing a path of the mixture of the exhaust gas and the extinguishing agent.

The mixing path may include a spiral path plate.

The path plate may include protrusions and depressions.

The first vent portion may include a first supporter and a second supporter combined in an attachable way and respectively having an opening, and a first vent plate disposed between the first supporter and the second supporter.

The first vent plate may be fractured when a temperature in the void path is equal to or greater than a predetermined value.

A second vent portion including a vent plate configured to be fractured when a pressure in the mixed gas tank is equal to or greater than a predetermined level may be disposed at an outlet of the mixed gas tank.

The battery cell may have a square shape.

The extinguishing agent may be a fluorine-based extinguishing agent.

The extinguishing agent may include oxygen atoms.

According to the embodiments, the gas discharging device is connected to the battery module so in the case of thermal runaway of the battery cell included in the battery module, discharged exhaust gas may be mixed with the extinguishing agent to lower upper flammability limit (UFL) of the exhaust gas, and increase lower flammability limit (LFL) may be increased to reduce an ignition region of the exhaust gas, and control firing and explosion by blocking firing caused by an external firing source.

### BRIEF DESCRIPTION OF THE DRAWINGS

The following drawings appended to the specification illustrate embodiments of the present disclosure to serve a technical concept of the present disclosure to be understood easily together with detailed descriptions of the present disclosure, so the present disclosure should not be meant to restrict the disclosure to the matters illustrated in the accompanying drawings.
FIG. 1 shows a perspective view of an energy storage device according to embodiments.
FIG. 2 shows a front view on an energy storage device shown in FIG. 1.
FIG. 3 shows a perspective view of a filling portion of a gas discharging device according to embodiments.
FIG. 4 shows a perspective view of a first vent portion of a gas discharging device according to embodiments.
FIG. 5 shows a perspective view on a mixing portion of a gas discharging device according to embodiments.

### DETAILED DESCRIPTION

Hereinafter, embodiments disclosed in the present specification will be described in detail with reference to the accompanying drawings. In the present specification, the same or similar components will be denoted by the same or similar reference numerals, and an overlapped description thereof will be omitted. As those skilled in the art would realize, the described embodiments may be modified in various different ways, all without departing from the spirit or scope of the present disclosure.

Parts that are irrelevant to the description will be omitted to clearly describe the present disclosure, and the same elements will be designated by the same reference numerals throughout the specification.

The size and thickness of each configuration shown in the drawings are arbitrarily shown for better understanding and ease of description, but the present disclosure is not limited thereto. In the drawings, the thickness of layers, films, panels, regions, etc., are enlarged for clarity. The thicknesses of some layers and areas are exaggerated for convenience of explanation.

It will be understood that if an element such as a layer, film, region, or substrate is referred to as being "on" another element, it can be directly on the other element or intervening elements may also be present. In contrast, if an element is referred to as being "directly on" another element, there are no intervening elements present. The word "on" or "above" means positioned on or below the object portion, and does not necessarily mean positioned on the upper side of the object portion based on a gravitational direction.

Unless explicitly described to the contrary, the word "comprise" and variations such as "comprises" or "comprising", will be understood to imply the inclusion of stated elements but not the exclusion of any other elements.

The phrase "in a plan view" means viewing an object portion from the top, and the phrase "in a cross-sectional view" means viewing a cross-section of which the object portion is vertically cut from the side.

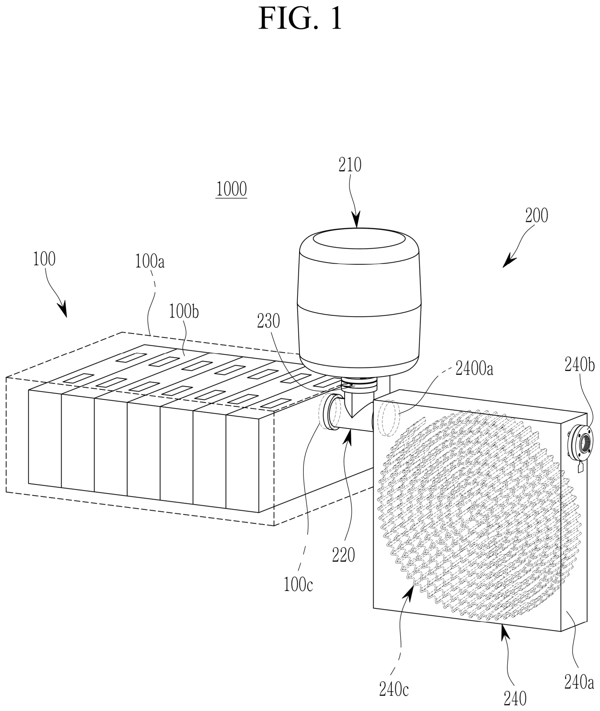

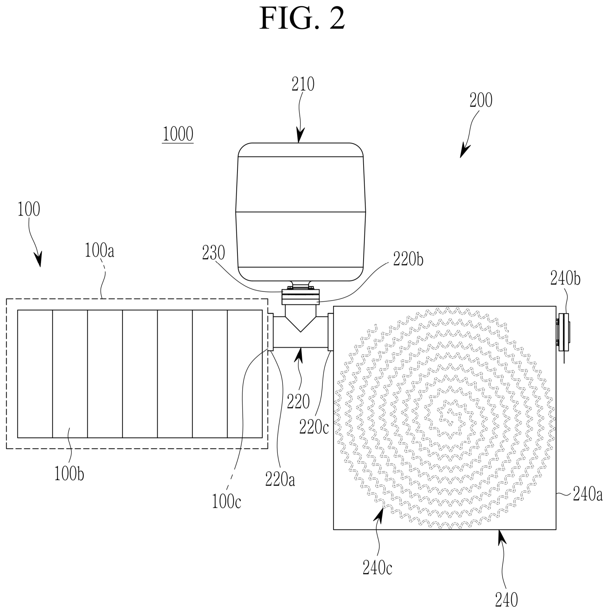

FIG. 1 shows a perspective view of an energy storage device according to embodiments, and FIG. 2 shows a front view on an energy storage device shown in FIG. 1.

Referring to FIG. 1 and FIG. 2, the energy storage device 1000 may include a battery module 100 and a gas discharging device 200.

The battery module 100 may include a module housing 100a and battery cells 100b received into the module housing 100a. The module housing 100a may be configured to accommodate a stack of the battery cells 100b, and an outlet 100c may be arranged on one side of the module housing 100a to discharge exhaust gas generated during thermal runaway of the battery cells 100b. The exhaust gas may include flammable gas.

In embodiments, the module housing 100a may be separated (e.g., an upper cover and a lower cover) to surround the stack of battery cells 100b, and may have a closed and sealed structure such that exhaust gas is guided to the outlet 100c and may be discharged to the outside of the module housing 100a through the outlet 100c. In the embodiment of FIG. 1, the module housing 100a may have a substantial hexahedral shape, and the outlet 100c may be disposed on one of a pair of narrow sides of the module housing 100a. Additionally, for the purpose of heat dissipation for the battery cell 100b, ventilation holes may be provided on the bottom surface of the module housing 100a. The structure of this module housing 100a is an example, and its shape, position and number of outlets, etc. may be modified.

Meanwhile, the battery cells 100b constituting the stack may include a case having a space in which an electrode assembly and an electrolyte are accommodated.

The electrode assembly may be a stack type electrode assembly. The electrode assembly may include separators, and positive electrodes and negative electrodes which are alternately stacked one above the other with the separators interposed therebetween. The positive electrodes, the negative electrodes, and the separators may be respectively configured in the form of thin sheets.

The positive electrodes may respectively include a positive electrode substrate and a positive electrode active material layer disposed on at least one surface of the positive electrode substrate. The positive electrode substrate may provide a path for the movement of charges generated in the positive electrode active material layer and may support the positive electrode active material layer.

The positive electrode substrate may include aluminum, and the positive electrode active material layer may include a positive electrode active material. The positive electrode active material may include a lithium transition metal composite oxide. The lithium transition metal composite oxide may include, for example, at least one of lithium-nickel oxide, lithium-cobalt oxide, lithium-manganese oxide, lithium-phosphoric acid iron compound, and cobalt-free lithium nickel-manganese oxide.

The negative electrodes may respectively include a negative electrode substrate and a negative electrode active material layer disposed on at least surface of the negative electrode substrate. The negative electrode substrate may provide a path for the movement of charges generated in the negative electrode active material layer and may support the negative electrode active material layer.

The negative electrode substrate may include copper, nickel, copper alloy, or nickel alloy, and the negative electrode active material layer may include a negative electrode active material. The negative electrode active material may include at least one of a carbon-based active material and a silicon-based active material. The carbon-based active material may include at least one of natural graphite and artificial graphite. The silicon-based active material may include at least one of a silicon-carbon composite active material and silicon oxide (SiOx, 0<x≤2).

The positive electrode active material layer and the negative electrode active material layer may further include a binder and/or a conductive material, respectively.

The separator may be made of a porous substrate, or may be configured with a porous substrate with a coating layer on at least one surface thereof. The porous substrate may include at least one of polyethylene (PE), polypropylene (PP), polyethylene terephthalate (PET), polypropylene terephthalate (PPT), polybutylene terephthalate (PBT), polyester (PES), polycarbonate (PC), and polyimide (PI). The coating layer may include a binder, and the binder may include a polyvinylidene fluoride (PVDF) compound. The separator may insulate the positive and negative electrodes while allowing the movement of lithium ions.

The electrode assembly may be housed inside the case together with the electrolyte. The case may be a pouch or a can.

In embodiments, the battery cell 100b may be a square rechargeable battery, but may not be limited thereto, and may also be provided as a pouch-type rechargeable battery or a cylindrical rechargeable battery.

If thermal runaway of the battery cell 100b occurs, the energy stored in the battery cell 100b may be temporarily discharged and the temperature of the battery cell 100b may increase to be over 400°C within several seconds. As the temperature increases, the positive electrode active material may be decomposed to generate oxygen, and the released oxygen may oxidize the electrolyte or may react with the positive electrode active material to increase the temperature of the battery cell 100b. Exhaust gas may be discharged through this chemical reaction. Here, the exhaust gas may be flammable gas such as hydrogen (H₂), carbon monoxide (CO), methane (CH₄), ethane (C₂H₆), ethylene (C₂H₄), etc.

The exhaust gas discharged to the outside of the battery module 100 may combust at high temperatures if an ignition source exists, ultimately causing fire and explosion.

In embodiments, the exhaust gas is discharged to the outside of the battery module 100 through outlet 100c during thermal runaway of the battery cell 100b.

Referring to FIG. 1 and FIG. 2, the gas discharging device 200 may include a filling portion 210 filled with an extinguishing agent, a void path 220 through which exhaust gas discharged from the battery module 100 and the extinguishing agent provided from the filling portion 210 flow, a first vent portion 230 operable by the exhaust gas inflowing into the void path 220, and a mixing portion 240 for mixing the exhaust gas supplied from the void path 220 with the extinguishing agent and discharging the mixture to the outside.

The battery module 100 and the filling portion 210, the first vent portion 230, and the mixing portion 240 of the gas discharging device 200 may be connected to each other through the void path 220.

In embodiments, the void path 220 may be formed by a T-shaped connection pipe including a first connection pipe 220a, a second connection pipe 220b, and a third connection pipe 220c. The first connection pipe 220a may be air-tightly connected to the outlet 100c, the second connection pipe 220b may be connected to the filling portion 210 via the first vent portion 230, and the third connection pipe 220c may be air-tightly connected to the mixing portion 240.

In embodiments, the first connection pipe 220a and the third connection pipe 220c may be disposed in a straight line facing each other, and the second connection pipe 220b may be disposed between the first connection pipe 220a and the third connection pipe 220c. For example, the first connection pipe 220a may be disposed in the center between the first connection pipe 220a and the third connection pipe 220c. The first, second, and third connection pipes 220a, 220b, and 220c may be provided as an integral structure. Referring to the drawings, the connection pipes 220a, 220b, and 220c may have an inverted T shape and may be disposed between the battery module 100 and the mixing portion 240. The first, second, and third connection pipes 220a, 220b, and 220c may each have a thread on their interior circumferences.

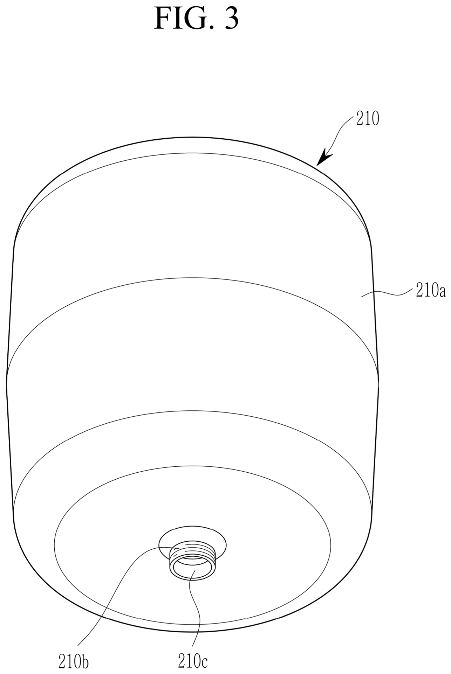

FIG. 3 shows a perspective view of a filling portion of a gas discharging device according to embodiments. FIG. 3 is a perspective view taken from the bottom of the filling portion 210.

Referring to FIG. 3, the filling portion 210 may include a cylindrical tank 210a having an internal space capable of being filled with an extinguishing agent and a protruding portion 210b disposed in the center of one side (a lower side as seen from the drawing) of the tank 210a, with threads formed on the external circumferential surface thereof. A penetration hole 210c penetrating into an internal space of the tank 210a may be provided on the inner side of the protruding portion 210b.

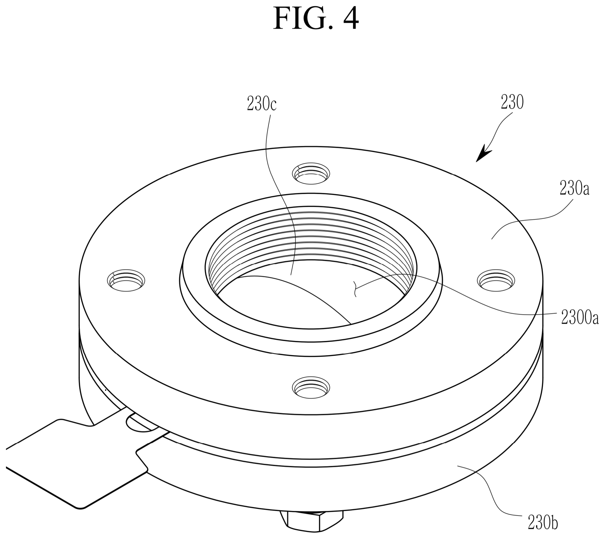

FIG. 4 shows a perspective view of a first vent portion of a gas discharging device according to embodiments.

Referring to FIG. 4, the first vent 230 may include a first supporter 230a, a second supporter 230b and, a first vent plate 230c disposed between the first and second supporters 230a and 230b, which are joined in an attachable way. The first supporter 230a and the second supporter 230b may be combined or separated to/from each other by screws, and a first opening 2300a and a second opening (not shown) having a predetermined size may be provided at the center of them. The first opening 2300a may penetrate the first supporter 230a, and may be formed on a thread to be combined with the protruding portion 210b of the tank 210a by screws on the interior circumference of the first supporter 230a around the first opening 2300a. The second opening may penetrate the second supporter 230b, and a thread to be combined with the second connection pipe 220b of the void path 220 by screws may be provided on the external circumferential surface of a protruding portion (not shown) protruding around the second opening.

The first vent plate 230c may be configured to be fractured if the pressure or temperature of the void path 220 exceeds a certain level due to the exhaust gas flowing through the void path 220 during thermal runaway of the battery cell 100b.

The filling portion 210 may be connected to the second connection pipe 220b of the void path 220 through the first vent portion 230. For example, the protruding portion 210b of the tank 210a may be aligned with the first opening 2300a of the first supporter 230a and may be connected to the first vent portion 230 by a screw combination, and the protruding portion of the second supporter 230b may be aligned with the second connection pipe 220b and may be connected by a screw combination. Hence, the filling portion 210 and the void path 220 may be connected to each other through the first vent portion 230.

The extinguishing agent provided in the filling portion 210 may be a fluorine-based extinguishing agent. The extinguishing agent may also include oxygen atoms.

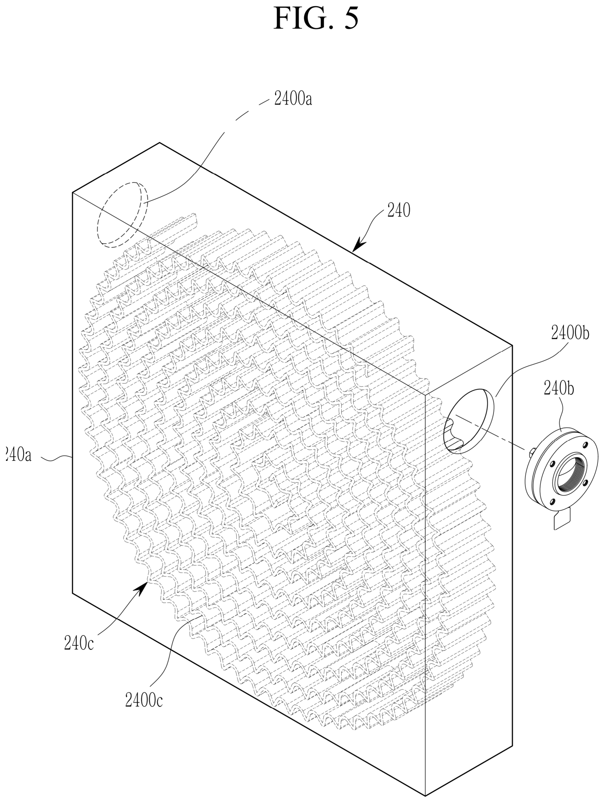

FIG. 5 shows a perspective view on a mixing portion of a gas discharging device according to embodiments.

Referring to FIG. 5, the mixing portion 240 may include a mixed gas tank 240a having an internal space of a certain size. In embodiments, the mixed gas tank 240a may have a rectangular hexahedral shape, and an inlet 2400a and an outlet 2400b may be provided on a pair of opposite sides, respectively.

The inlet 2400a may be air-tightly connected to the third connection pipe 220c of the void path 220. The connection method thereof may not be limited as long as it prevents the exhaust gas and the extinguishing agent flowing in through the third connection pipe 220c from leaking. The exhaust gas, the extinguishing agent and first mixed gas which is a mixture of the exhaust gas and the extinguishing agent, may flow into the inlet 2400a from the void path 220.

The second vent portion 240b may be connected to the outlet 2400b in an airtight manner. The second vent portion 240b may have the same structure as the first vent portion 230 described herein, so its detailed description is omitted for convenience. For example, the second vent portion 240b may include two supporters and a vent plate interposed between the two supporters and configured to be fractured if the pressure inside the mixed gas tank 240a exceeds a certain level.

A mixing path 240c for mixing the exhaust gas, the extinguishing agent, and first mixed gas input through the inlet 2400a may be provided inside the mixed gas tank 240a. The mixing path 240c may induce a flow path of the exhaust gas, the extinguishing agent, and the first mixed gas within the mixed gas tank 240a to be as long as possible so they may be sufficiently mixed.

In embodiments, the mixing path 240c may be configured as a guide path plate 2400c having a spiral shape with protrusions and depressions. In some embodiments, the mixing path may have the shape of a meander. For this purpose, plates having a predetermined length may be placed at arbitrary intervals in the mixed gas tank 240a.

Regarding the battery module 100 according to embodiments, if thermal runaway occurs in at least one battery cell 100b and exhaust gas is generated, the exhaust gas may flow along the first connection pipe 220a and the third connection pipe 220c of the void path 220 through the outlet 100c of the module housing 100a and may move to the mixed gas tank 240a of the mixing portion 240. The pressure and/or temperature within the void path 220 may change due to the exhaust gas, and if the value is greater than a predetermined level, the first vent plate 230c of the first vent portion 230 may be fractured.

According to the fracture of the first vent plate 230c, the extinguishing agent may be supplied to the second connection pipe 200b of the void path 220 from the tank 210a of the filling portion 210, and may be inflowed into the mixed gas tank 240a together with the exhaust gas by the pressure of the exhaust gas flowing along the first and third connection pipes 200a and 200c. During this process, some exhaust gas and extinguishing agent may be mixed within the void path 220 to form first mixed gas.

The exhaust gas, the extinguishing agent, and the primary mixed gas supplied to the mixed gas tank 240a may move along the mixing path 240c and may be sufficiently mixed during the movement.

If the exhaust gas and the extinguishing agent are sufficiently mixed in the mixed gas tank 240a and the pressure in the mixed gas tank 240a reaches a predetermined level due to the mixed gas, the vent plate of the second vent portion 240b may be fractured. Accordingly, the mixed gas may be discharged to the outside through the outlet 2400b.

As described herein, by connecting the gas discharging device 200 to the battery module 100, if the battery cell 100b included in the battery module 100 undergoes thermal runaway, the discharged exhaust gas may be mixed with the extinguishing agent to reduce the upper combustible limit (UFL) of the exhaust gas and increase the lower combustible limit (LFL), thereby reducing the ignition region of the exhaust gas, and controlling ignition and explosion by blocking ignition by an external ignition source.

Accordingly, the safety of the energy storage device 1000 may be improved to protect users.

In the herein-described embodiment, it was described as an example that one gas discharging device is connected to one battery module to configure an energy storage device. However, the energy storage device according to the present disclosure may be configured by connecting each gas discharging device to a plurality of battery modules or by grouping a plurality of battery modules and connecting a gas discharging device to them.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

## Claims

1. An energy storage device comprising:
a battery module (100) comprising battery cells (100b); and
a gas discharging device (200) connected to the battery module (100),
wherein the gas discharging device (200) comprises:
a filling portion (210) filled with an extinguishing agent,
a void path (220) for moving exhaust gas discharge from the battery module (100) and the extinguishing agent input from the filling portion (210),
a first vent portion (230) disposed between the filling portion (210) and the void path (220), and
a mixing portion (240), connected to the void path (220), for mixing the exhaust gas and the extinguishing agent input from the void path (220) and discharging mixed gas to an outside.

2. The energy storage device as claimed in claim 1, wherein
the void path (220) comprises:
a first connection pipe (220a) connected to the battery module (100);
a second connection pipe (220b) connected to the first vent portion (230); and
a third connection pipe (220c) connected to the mixing portion (240).

3. The energy storage device as claimed in claim 2, wherein:
the first connection pipe (220a) faces the third connection pipe (220c), and
the second connection pipe (220b) is disposed between the first connection pipe (220a) and the third connection pipe (220c).

4. The energy storage device as claimed in any one of claims 1 to 3, wherein
the filling portion (210) comprises:
a tank (210a) having an internal space configured to be filled with the extinguishing agent;
a protruding portion (210b) disposed on a side of the tank (210a), and having a thread formed on an external circumferential surface; and
a penetration hole (210c) provided on an inside of the protruding portion (210b) and penetrating an internal space of the tank (210a).

5. The energy storage device as claimed in any one of claims 1 to 4, wherein
the mixing portion (240) comprises:
a mixed gas tank (240a) comprising an internal space having a predetermined size, an inlet (2400a) for inflowing the exhaust gas and the extinguishing agent, and an outlet (2400b) for discharging a mixture of the exhaust gas and the extinguishing agent mixed in the internal space; and
a mixing path (240c) arranged in the internal space and providing a path of the mixture of the exhaust gas and the extinguishing agent.

6. The energy storage device as claimed in claim 5, wherein
the mixing path (240c) comprises a spiral path plate (2400c).

7. The energy storage device as claimed in claim 6, wherein
the path plate (2400c) comprises protrusions and depressions.

8. The energy storage device as claimed in any one of claims 1 to 7, wherein
the first vent portion (230) comprises:
a first supporter (230a) and a second supporter (230b) combined in an attachable way and respectively having an opening; and
a first vent plate (230c) disposed between the first supporter (230a) and the second supporter (230b).

9. The energy storage device as claimed in claim 8, wherein
the first vent plate (230) is fractured when a temperature in the void path (220) is equal to or greater than a predetermined value.

10. The energy storage device as claimed in any one of claims 5 to 9, wherein
a second vent portion (240b), comprising a vent plate configured to be fractured when a pressure in the mixed gas tank (240a) is equal to or greater than a predetermined level, is disposed at an outlet of the mixed gas tank (240a).

11. The energy storage device as claimed in any one of claims 1 to 10, wherein
the battery cell (100b) has a square shape.

12. The energy storage device as claimed in any one of claims 1 to 11, wherein
the extinguishing agent is a fluorine-based extinguishing agent.

13. The energy storage device as claimed in claim 12, wherein
the extinguishing agent comprises oxygen atoms.
